# EUROPEAN PATENT APPLICATION

(11) **EP 3 798 352 A1**
(43) Date of publication of application: **31.03.2021**
(21) Application number: 19804551.0
(22) Date of filing: 30.04.2019
(51) Int. Cl.: D06F 58/08, D06F 29/00, D06F 37/30

(54) **CLUTCH DEVICE FOR CLOTHES TREATING APPARATUS**

(30) Priority: 18.05.2018 CN 201810478119
(71) Applicant: Qingdao Haier Drum Washing Machine Co., Ltd., Qingdao, Shandong 266101 (CN); Haier Smart Home Co., Ltd., Qingdao, Shandong 266101 (CN)
(72) Inventor: LI, Wenwei, Qingdao, Shandong 266101 (CN); PAN, Jihui, Qingdao, Shandong 266101 (CN); XING, Benfu, Qingdao, Shandong 266101 (CN); ZHANG, Xinhua, Qingdao, Shandong 266101 (CN)
(74) Representative: Beck & Rössig European Patent Attorneys
(86) International application number: PCT/CN2019/085121
(87) International publication number: WO 2019/218872

(57) **Abstract**

A clutch device for a clothing processing device is provided. The clothing processing device comprises a driving motor (1), a drying fan, a driven wheel (2) and a drying drum, a first output end (11) of the driving motor (1) is in transmission connection with the drying fan, a second output end (12) drives the driven wheel (2) to rotate, the driven wheel (2) drives the drying drum to rotate through a belt (3), the driven wheel (2) is installed on the driving motor (1) in a swinging manner through a rocker arm (13), and the clutch device drives the rocker arm (13) to rotate to a position at which the driven wheel (2) and the belt (3) are engaged with or separated from each other and are kept fixed. The clutch device is applied to a clothing processing device provided with a washing drum and a drying drum, which is beneficial for switching between the washing drum and the drying drum for drying separately when the washing drum and the drying drum use the same drying system.

## Description

### TECHNICAL FIELD

The present disclosure belongs to the technical field of clothing processing devices, in particular to a clutch device for a clothing processing device.

### BACKGROUND

Along with the improvement of life quality, people are more and more in pursuit of a high-quality delicate life. Clothes dryers are coming into more and more ordinary families, becoming one of the essential home appliances of high-quality life. In ordinary families, a clothes dryer is usually stacked on a roller washing machine, to form a simply superimposed entirety, however, since the control panel of the clothes dryer is high, user operation is not convenient, moreover, after clothes are washed in a roller washing machine, the user needs to manually deliver clothes into a clothes dryer for drying, even if only a small number of clothes are washed, the user also needs to walk to the all-in-one machine to take and place clothes, therefore, the user finds it very inconvenient to use.

To facilitate users, washing and caring all-in-one machines come into being, then the washing machine and a clothes dryer share the heating and condensing devices of the clothes dryer, and the washing machine of the clothes washing and caring all-in-one machine can also dry clothes.

However, as to the current clothes washing and caring all-in-one machine, a clothes dryer is stacked on a washing machine, under the premise that both the washing machine and the clothes dryer can realize the drying function, when the washing machine and the clothes dryer use the same drying system, the washing machine and the clothes dryer cannot separately dry. In this way, when the clothes to be washed by the user are less and the requirement can be satisfied by only utilizing the drying function of the washing machine, the clothes dryer can also simultaneously rotate and operate, thereby leading to unnecessary energy waste.

Therefore, a technical solution of a washing and drying all-in-one machine in which the drying functions of the washing machine and the clothes dryer can be separated and can be separately controlled is in urgent need.

In view of this, the present disclosure is hereby proposed.

### SUMMARY

The technical problem to be solved in the present disclosure is to overcome shortcomings of the prior art, and provide a clutch device for the clothing processing device. The clutch device can be applied to the clothing processing device provided with a washing drum and a drying drum, such that the washing drum and the drying drum share the heating and condensing devices of a clothes dryer, the washing drum of the clothing processing device can also dry clothes, thereby facilitating switch between the drying drum and the washing drum to perform the drying process, when the clutch device is adopted, not only the structure of the clothing processing device is greatly simplified, the set parts are reduced, but also no tedious control program needs to be set, thereby being elaborate in design and simple and effective.

In order to solve the above technical problem, a basic conception of the technical solution adopted in the present disclosure is as follows:
a clutch device for a clothing processing device is provided, wherein the clothing processing device includes a driving motor, a drying fan, a driven wheel and a drying drum, a first output end of the driving motor is in transmission connection with the drying fan, a second output end drives the driven wheel to rotate, the driven wheel drives the drying drum to rotate through a belt, the driven wheel is installed on the driving motor in a swinging manner through a rocker arm, and the clutch device drives the rocker arm to rotate to a position at which the driven wheel and the belt are engaged with or separated from each other and are kept fixed.

In the above solution, the first output end of the driving motor is in transmission connection with the drying fan, while the second output end is in transmission connection with the driven wheel, through the design of a clutch device, when the driven wheel is engaged with the belt, the drying drum is driven to rotate, the drying drum performs drying operations, when the washing drum needs to dry, the driven wheel is controlled to be separated from the belt, then the drying drum stops rotating, and the washing drum rotates under the driving of the motor to perform the drying process. The clutch device of the present disclosure is applied to the clothing processing device provided with a washing drum and a drying drum, which is beneficial for switching between the washing drum and the drying drum for drying separately when the washing drum and the drying drum use the same drying system.

Preferably, the clutch device includes a driving mechanism configured to drive the rocker arm to rotate and a stop mechanism configured to control the driving mechanism to stop, wherein when the driving mechanism drives the rocker arm to rotate to a position at which the driven wheel is engaged with or separated from the belt, the stop mechanism controls the driving mechanism to stop, such that the driven wheel and the belt keep an engaged or separated state.

In the above solution, the driving mechanism is configured to drive the rocker arm to rotate, to realize a change in relative position between the driven wheel and the belt, while the stop mechanism is configured to control the driving mechanism to stop at the position at which the driven wheel is engaged with or separated from the belt, such that the driven wheel and the belt keep the state of engagement or separation, thereby ensuring normal operation of the clothing processing device.

Preferably, the stop mechanism includes an induction switch and a switch triggering part, the switch triggering part is arranged at a driving end of the driving mechanism, and when the driving end drives the rocker arm to rotate to a position at which the driven wheel is engaged with or separated from the belt, the switch triggering part triggers the induction switch, and the driving mechanism is stopped.

In the above solution, the switch triggering part is arranged at the driving end of the driving mechanism, in the process in which the driving mechanism drives the rocker arm to rotate, the switch triggering part automatically triggers the induction switch, thereby simplifying the control process, further greatly simplifying the structure of the clothing processing device, reducing the set parts, needing no setting of tedious control programs, and being elaborate in design and simple and effective.

Preferably, the driving mechanism includes a motor, a driving shaft of the motor is fixed with a driving part, the driving part is provided with the switch triggering part and a connecting part for connecting the transmission part, the driving part drives the rocker arm to swing through the transmission part, such that the driven wheel is engaged with or separated from the belt, and the switch triggering part triggers the induction switch when the rocker arm swings to a position at which the driven wheel is engaged with or separated from the belt, such that the driven wheel and the belt keep an engaged or separated state; and
preferably, the switch triggering part is a convex block arranged on the driving part, in the rotating process of the driving part, the protruding part is in contact with the induction switch, to trigger the induction switch.

Preferably, the induction switch includes a first contact and a second contact, the driving part, corresponding to the first contact and the second contact, is respectively provided with a first switch triggering part and a second switch triggering part in a protruding manner, when the driving part rotates to a position at which the driven wheel is engaged with the belt, the first switch triggering part or the second switch triggering part triggers the corresponding contact, the driving mechanism is stopped, when the driving part rotates to a position at which the driven wheel is separated from the belt, the second switch triggering part or the first switch triggering part triggers the corresponding contact, and the driving mechanism is stopped.

In the above solution, the design of two contacts and two switch triggering parts is beneficial for respectively controlling the driving mechanism to stop when the driven wheel is engaged with and separated from the belt.

Preferably, the driving part includes a blocky body, the first contact and the second contact are arranged in sequence along the same direction in parallel with the axis of the motor, the first switch triggering part is arranged at the position, corresponding to the first contact, on the body, the second switch triggering part is arranged at the position, corresponding to the second contact, on the body, and the connecting part is arranged at the position, in the same radial direction as the first switch triggering part or the second switch triggering part, on the body; and
preferably, the connecting part is arranged on the first switch triggering part or the second switch triggering part.

The switch triggering part provided with a connecting part rotates and is far away from the driving motor, the driven wheel is engaged with the belt, the other switch triggering part is in contact with the corresponding contact, the driving mechanism is stopped, the switch triggering part provided with a connecting part rotates and is adjacent to the driving motor, the driven wheel is separated from the belt, the switch triggering part provided with the connecting part is in contact with the corresponding contact, and the driving mechanism is stopped.

Preferably, the first switch triggering part and the second switch triggering part are respectively arranged at two opposite sides on the body, the induction switch is arranged on the top of the body, and the two induction contacts are respectively arranged at the top of the two switch triggering parts; and
when the switch triggering part provided with a connecting part rotates to the lowest end, the driven wheel is engaged with the belt, the other switch triggering part is in contact with the corresponding contact, the driving mechanism is stopped, when the switch triggering part provided with a connecting part rotates to the top, the driven wheel is separated from the belt, the switch triggering part provided with a connecting part is in contact with the corresponding contact, and the driving mechanism is stopped.

In the above solution, the first switch triggering part and the second switch triggering part are arranged at two opposite sides on the body, thereby being beneficial for increasing the rotating angle of the rocker arm driven by the driving part, and ensuring engagement and separation of the driven wheel and the belt.

Preferably, the transmission part is an elastic piece, the clutch device includes a limiting piece, one end of the limiting piece is connected onto the connecting part of the driving part, and the other end is connected and matched with the rocker arm, such that in the process in which the driving part drives or fixes the rocker arm, the relative distance between the connecting part limiting the driving part and the rocker arm is within a certain range, and the spring is protected.

In the above solution, the limiting piece is set to enable the relative distance between the connecting part of the driving part and the rocker arm to be within a certain range, thereby preventing damage to the elastic piece caused by a too large or too small distance between the two.

Preferably, the rocker arm is provided with a protruding connecting part, one end of the limiting piece is connected to the connecting part on the driving part in a rotatable manner, the other end is provided with a strip-shaped chute, the connecting part on the rocker arm is connected with the chute in a slidable manner, and the chute limits the rocker arm to rotate within a certain range.

In the above solution, one end of the limiting piece is connected with the connecting part on the driving part in a rotatable manner, that is, rotation can only be performed in the circumferential direction, while the other end of the driving part is provided with a chute, then the driving part can not only rotate in the circumferential direction of the connecting part on the rocker arm, but also slide along a radial direction of the connecting part on the rocker arm, thereby limiting the rocker arm to move within a certain range, preventing too-tight or too-loose engagement between the driven wheel and the belt, and being beneficial for stable power transmission.

Preferably, the elastic piece is a spring, one end of the spring is connected to a connecting part on the driving part, the other end is connected to a connecting part on the rocker arm, and the limiting piece is arranged to penetrate through the spring.

In the above solution, the limiting piece is arranged to penetrate through a spiral section of the spring, thereby not only saving space, but also preventing interference and friction between the spring and the limiting piece during operation, which may influence quality of the clothing processing device.

After the above technical solution is adopted, the present disclosure has the following beneficial effects compared with the prior art:
1. In the present disclosure, the above clutch device is applied to a clothing processing device provided with a drying drum and a washing drum, the drying drum and the washing drum of the clothing processing device share a set of drying and condensing devices, through the clutch device, the separation of drying functions of the drying drum and the washing drum can be realized simply and effectively, thereby not only providing more options for the users, but also avoiding unnecessary energy waste and unnecessary loss to the device caused by the rotation of the drying drum when the drying drum is used separately, and being beneficial for extending the service life of the clothing processing device.
2. In the present disclosure, the clutch device is simple in structure, no tedious part is required, the structure of the existing clothing processing device is sufficiently utilized, research and production costs are saved, and the fault rate can be lowered.
3. After the clothing processing device adopts the clutch device, the program setting is simplified, effective realization can be achieved only through controlling the operation of the driving mechanism, the control logic is simple, and the operation is convenient and reliable.
4. In the present disclosure, the setting of engagement between the driven wheel and the belt is beneficial for stably controlling the drying drum to rotate, simplifies the mechanical structure, and is reliable in transmission.

A further detailed description will be given below on specific embodiments of the present disclosure in combination with accompanying drawings.

### BRIEF DESCRIPTION OF THE DRAWINGS

As a part of the present disclosure, accompanying drawings are used for providing a further understanding of the present disclosure, schematic embodiments and descriptions thereof of the present disclosure are used for explaining the present disclosure, rather than constituting an improper limit to the present disclosure. Obviously, accompanying drawings described below are merely some embodiments, for those skilled in the art, other drawings can be obtained based on these drawings without any creative effort. In the drawings:
Fig. 1 is a structural schematic diagram of the inside of a clothing processing device of the present disclosure;
Fig. 2 is a partial view of Fig. 1;
Fig. 3 is a structural schematic diagram of a clutch device of the present disclosure;
Fig. 4 is another structural schematic diagram of a clutch device of the present disclosure.

Reference numerals in the figure: 1, driving motor; 11, first output end; 12, second output end; 13, rocker arm; 131, connecting part on the rocker arm; 2, driven wheel; 3, belt; 4, induction switch; 41, first contact; 42, second contact; 5, motor; 6, driving part; 61, first switch triggering part; 62, second switch triggering part; 63, connecting part; 64, body; 7, spring; 8, limiting piece; 81, chute.

It should be noted that, these drawings and text descriptions are not aiming at limiting a conception range of the present disclosure in any form, but to describe concepts of the present disclosure for those skilled in the art with reference to specific embodiments.

### DETAILED DESCRIPTION OF THE EMBODIMENTS

In order to achieve the object, technical solutions and advantages of the embodiments in the present disclosure clearer, a clear and complete description will be given below on technical solutions in the embodiments in combination with accompanying drawings in the embodiments of the present disclosure. The following embodiments are used for describing the present disclosure, rather than for limiting the scope of the present disclosure.

In the description of the present disclosure, it should be noted that, the orientation or positional relationship indicated by such terms as "up", "down", "front", "rear", "left", "right", "vertical", "inner" and "outer" is the orientation or positional relationship based on the accompanying drawings. Such terms are merely for the convenience of description of the present disclosure and simplified description, rather than indicating or implying that the device or element referred to must be located in a certain orientation or must be constructed or operated in a certain orientation, therefore, the terms cannot be understood as a limitation to the present disclosure.

In the description of the present disclosure, it should be noted that, unless otherwise stipulated and defined definitely, such terms as "installed", "connected" and "in connection" should be understood in their broad sense, e.g., the connection can be a fixed connection, a detachable connection or an integral connection; can be mechanical connection or electrical connection; and can be direct connection or can be indirect connection through an intermediate. For those skilled in the art, the specific meanings of the above terms in the present disclosure can be understood according to specific conditions.

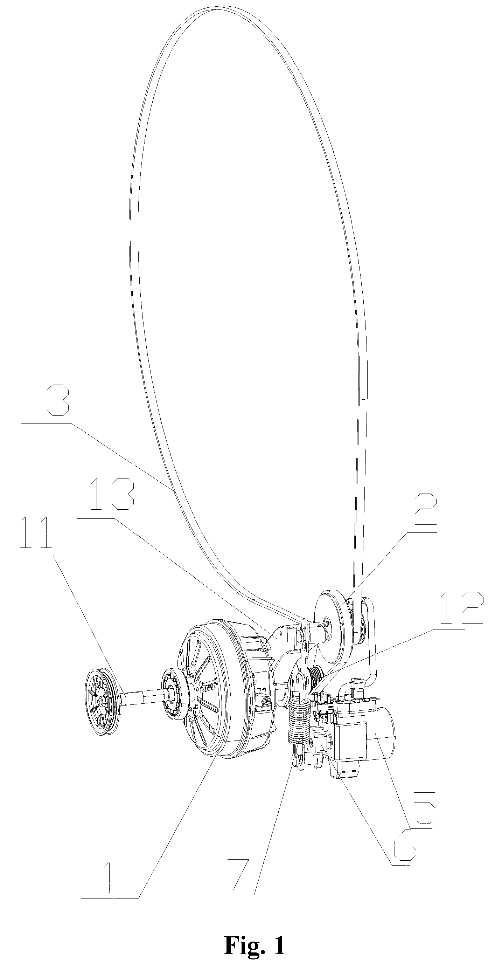

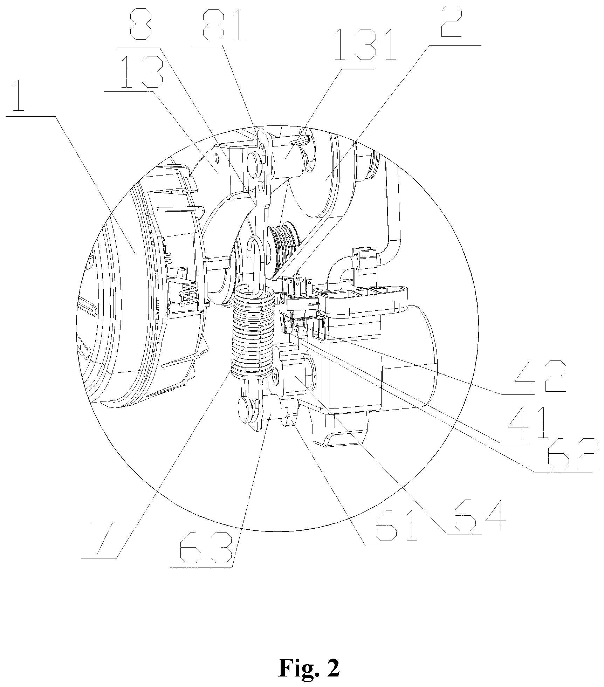

As shown in Fig. 1 to Fig. 4, the present disclosure provides a clutch device for a clothing processing device, and the clothing processing device includes a driving motor 1, a drying fan, a driven wheel 2 and a drying drum, a first output end 11 of the driving motor 1 is in transmission connection with the drying fan, a second output end 12 drives the driven wheel 2 to rotate, the driven wheel 2 drives the drying drum to rotate through a belt 3, the driven wheel 2 is installed on the driving motor 1 in a swinging manner through a rocker arm 13, and the clutch device drives the rocker arm 13 to rotate to a position at which the driven wheel 2 and the belt 3 are engaged with or separated from each other and are kept fixed.

In the above solution, the first output end 11 of the driving motor 1 is in transmission connection with the drying fan, while second output end 12 is in transmission connection with the driven wheel 2, through the design of a clutch device, when the driven wheel 2 is engaged with the belt 3, the drying drum is driven to rotate, the drying drum performs drying operations, when the washing drum needs to dry, the driven wheel 2 is controlled to be separated from the belt 3, then the drying drum stops rotating, and the washing drum rotates under the driving of the motor to perform the drying process. The clutch device of the present disclosure is applied to the clothing processing device provided with a washing drum and a drying drum, which is beneficial for switching between the washing drum and the drying drum for drying separately when the washing drum and the drying drum use the same drying system.

Preferably, the clutch device includes a driving mechanism configured to drive the rocker arm 13 to rotate and a stop mechanism configured to control the driving mechanism to stop, wherein when the driving mechanism drives the rocker arm 13 to rotate to a position at which the driven wheel 2 is engaged with or separated from the belt 3, the stop mechanism controls the driving mechanism to stop, such that the driven wheel 2 and the belt 3 keep an engaged or separated state.

In the above solution, the driving mechanism is configured to drive the rocker arm 13 to rotate, to realize a change in relative position between the driven wheel 2 and the belt 3, while the stop mechanism is configured to control the driving mechanism to stop at the position at which the driven wheel 2 is engaged with or separated from the belt 3, such that the driven wheel 2 and the belt 3 keep the state of engagement or separation, thereby ensuring normal operation of the clothing processing device.

Preferably, the stop mechanism includes an induction switch 4 and a switch triggering part, the switch triggering part is arranged at a driving end of the driving mechanism, and when the driving end drives the rocker arm 13 to rotate to a position at which the driven wheel 2 is engaged with or separated from the belt 3, the switch triggering part triggers the induction switch 4, and the driving mechanism is stopped.

In the above solution, the switch triggering part is arranged at the driving end of the driving mechanism, in the process in which the driving mechanism drives the rocker arm 13 to rotate, the switch triggering part automatically triggers the induction switch 4, thereby simplifying the control process, further greatly simplifying the structure of the clothing processing device, reducing the set parts, needing no setting of tedious control programs, and being elaborate in design and simple and effective.

Preferably, the driving mechanism includes a motor 5, a driving shaft of the motor 5 is fixed with a driving part 6, the driving part 6 is provided with the switch triggering part and a connecting part 63 for connecting the transmission part, the driving part 6 drives the rocker arm 13 to swing through the transmission part, such that the driven wheel 2 is engaged with or separated from the belt 3, and the switch triggering part triggers the induction switch 4 when the rocker arm 13 swings to a position at which the driven wheel 2 is engaged with or separated from the belt 3, such that the driven wheel 2 and the belt 3 keep an engaged or separated state; and preferably, the switch triggering part is a convex block arranged on the driving part 6, in the rotating process of the driving part 6, the protruding part is in contact with the induction switch 4, to trigger the induction switch 4.

Preferably, the induction switch 4 includes a first contact 41 and a second contact 42, the driving part 6, corresponding to the first contact 41 and the second contact 42, is respectively provided with a first switch triggering part 61 and a second switch triggering part 62 in a protruding manner, when the driving part 6 rotates to a position at which the driven wheel 2 is engaged with the belt 3, the first switch triggering part 61 or the second switch triggering part 62 triggers the corresponding contact, the driving mechanism is stopped, when the driving part 6 rotates to a position at which the driven wheel 2 is separated from the belt 3, the second switch triggering part 62 or the first switch triggering part 61 triggers the corresponding contact, and the driving mechanism is stopped.

In the above solution, the design of two contacts and two switch triggering parts is beneficial for respectively controlling the driving mechanism to stop when the driven wheel 2 is engaged with and separated from the belt 3.

Preferably, the driving part 6 includes a blocky body 64, the first contact 41 and the second contact 42 are arranged in sequence along the same direction in parallel with the axis of the motor, the first switch triggering part 61 is arranged at the position, corresponding to the first contact 41, on the body 64, the second switch triggering part 62 is arranged at the position, corresponding to the second contact 42, on the body 64, and the connecting part is arranged at the position, in the same radial direction as the first switch triggering part 61 or the second switch triggering part 62, on the body 64; and preferably, the connecting part 63 is arranged on the first switch triggering part 61 or the second switch triggering part 62.

The switch triggering part provided with a connecting part 63 rotates and is far away from the driving motor 1, the driven wheel 2 is engaged with the belt 3, the other switch triggering part is in contact with the corresponding contact, the driving mechanism is stopped, the switch triggering part provided with a connecting part 63 rotates and is adjacent to the driving motor 1, the driven wheel 2 is separated from the belt 3, the switch triggering part provided with the connecting part is in contact with the corresponding contact, and the driving mechanism is stopped.

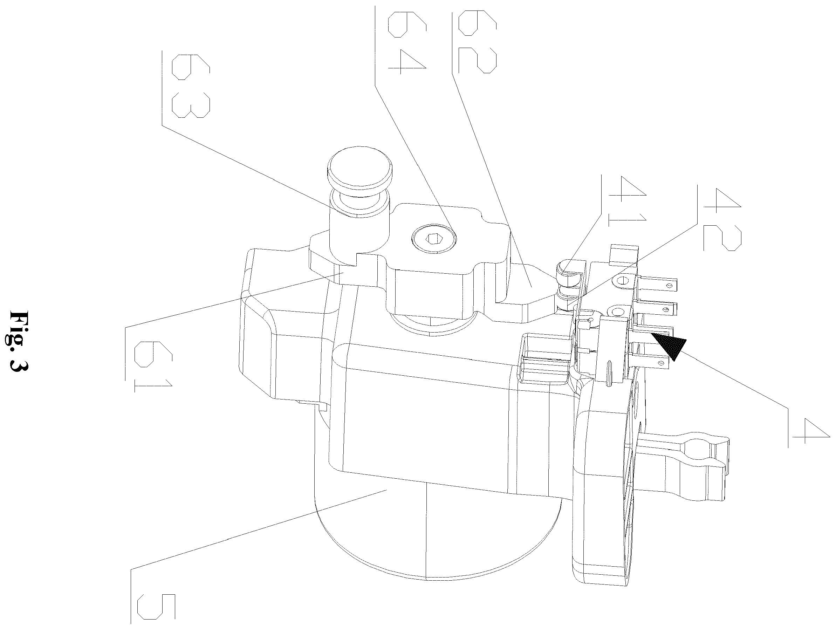

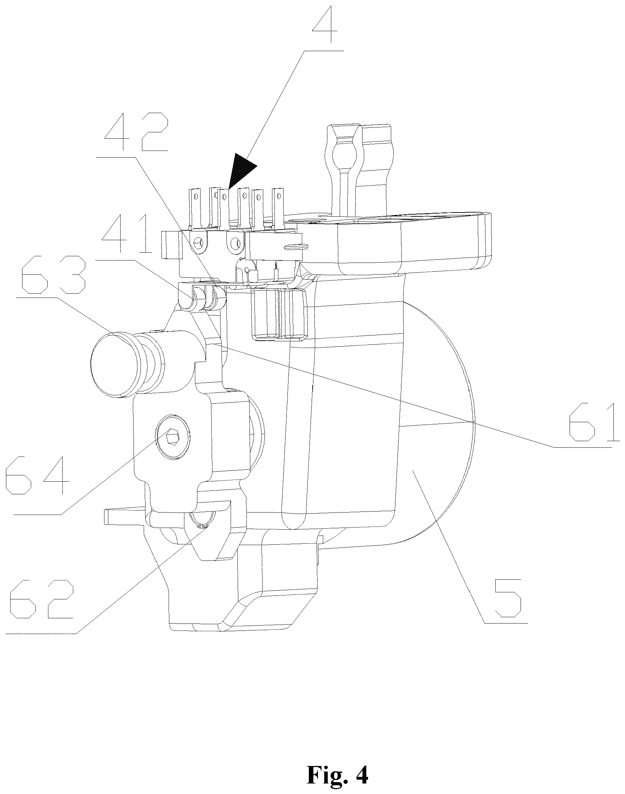

As an optimal solution, please refer to Fig. 3 and Fig. 4, the first switch triggering part 61 and the second switch triggering part 62 are respectively arranged at two opposite sides on the body 64, the induction switch 4 is arranged on the top of the body 64, and the two induction contacts are respectively arranged on the top of the two switch triggering parts; as shown in Fig. 3, when the switch triggering part 61 provided with a connecting part 63 rotates to the lowest end, the driven wheel 2 is engaged with the belt 3, the other switch triggering part 62 is in contact with the corresponding contact 42, the driving mechanism is stopped; as shown in Fig. 4, when the switch triggering part 61 provided with a connecting part 63 rotates to the top, the driven wheel 2 is separated from the belt 3, the switch triggering part 61 provided with a connecting part 63 is in contact with the corresponding contact 41, and the driving mechanism is stopped.

In the above solution, the first switch triggering part 61 and the second switch triggering part 62 are arranged at two opposite sides on the body 64, thereby being beneficial for increasing the rotating angle of the rocker arm 13 driven by the driving part 6, and ensuring engagement and separation of the driven wheel 2 and the belt 3.

Preferably, the transmission part is an elastic piece, the clutch device includes a limiting piece 8, one end of the limiting piece 8 is connected onto the connecting part of the driving part 6, and the other end is connected and matched with the rocker arm 13, such that in the process in which the driving part 6 drives or fixes the rocker arm 13, the relative distance between the connecting part limiting the driving part 6 and the rocker arm 13 is within a certain range, and the spring 7 is protected.

In the above solution, the limiting piece 8 is set to enable the relative distance between the connecting part of the driving part 6 and the rocker arm 13 to be within a certain range, thereby preventing damage to the elastic piece caused by a too large or too small distance between the two.

Preferably, the rocker arm 13 is provided with a protruding connecting part 131, one end of the limiting piece 8 is connected to the connecting part 63 on the driving part 6 in a rotatable manner, the other end is provided with a strip-shaped chute 81, the connecting part 131 on the rocker arm 13 is connected with the chute 81 in a slidable manner, and the chute 81 limits the rocker arm 13 to rotate within a certain range.

In the above solution, one end of the limiting piece 8 is connected with the connecting part on the driving part 6 in a rotatable manner, that is, rotation can only be performed in the circumferential direction, while the other end of the driving part 6 is provided with a chute 81, then the driving part can not only rotate in the circumferential direction of the connecting part on the rocker arm 13, but also slide along a radial direction of the connecting part on the rocker arm 13, thereby limiting the rocker arm 13 to move within a certain range, preventing too-tight or too-loose engagement between the driven wheel 2 and the belt 3, and being beneficial for stable power transmission.

Preferably, the elastic piece is a spring 7, one end of the spring 7 is connected to a connecting part on the driving part 6, the other end is connected to a connecting part on the rocker arm 13, and the limiting piece 8 is arranged to penetrate through the spring 7.

In the above solution, the limiting piece 8 is arranged to penetrate through a spiral section of the spring 7, thereby not only saving space, but also preventing interference and friction between the spring 7 and the limiting piece 8 during operation, which may influence quality of the clothing processing device.

What is described above is merely the preferred embodiments of the present disclosure, rather than limiting the present disclosure in any form, although the present disclosure has been disclosed above with the preferred embodiments, the preferred embodiments are not used for limiting the present disclosure, those skilled in the art can make some changes or modify into equivalent embodiments with equal changes by utilizing the above suggested technical contents without departing from the scope of the technical solution of the present disclosure, and the contents not departing from the technical solution of the present disclosure, any simple amendments, equivalent changes or modifications made to the above embodiments based on the technical essence of the present disclosure shall all fall within the scope of the solution of the present disclosure.

## Claims

1. A clutch device for a clothing processing device, wherein the clothing processing device comprises a driving motor, a drying fan, a driven wheel and a drying drum, a first output end of the driving motor is in transmission connection with the drying fan, a second output end of the driving motor drives the driven wheel to rotate, the driven wheel drives the drying drum to rotate via a belt, the driven wheel is installed on the driving motor in a swinging manner through a rocker arm, and the clutch device drives the rocker arm to rotate to a position at which the driven wheel and the belt are engaged with or separated from each other and are kept fixed.

2. The clutch device for the clothing processing device according to claim 1, comprising a driving mechanism configured to drive the rocker arm to rotate and a stop mechanism configured to control the driving mechanism to stop, wherein when the driving mechanism drives the rocker arm to rotate to the position at which the driven wheel is engaged with or separated from the belt, the stop mechanism controls the driving mechanism to stop, such that the driven wheel and the belt keep an engaged or separated state.

3. The clutch device for the clothing processing device according to claim 2, wherein the stop mechanism comprises an induction switch and a switch triggering part, the switch triggering part is arranged at a driving end of the driving mechanism, and when the driving end drives the rocker arm to rotate to the position at which the driven wheel is engaged with or separated from the belt, the switch triggering part triggers the induction switch, and the driving mechanism is stopped.

4. The clutch device for the clothing processing device according to claim 3, wherein the driving mechanism comprises a motor, a driving shaft of the motor is fixed with a driving part, the driving part is provided with the switch triggering part and a connecting part for connecting a transmission part, the driving part drives the rocker arm to swing through the transmission part, such that the driven wheel is engaged with or separated from the belt, and the switch triggering part triggers the induction switch when the rocker arm swings to the position at which the driven wheel is engaged with or separated from the belt, such that the driven wheel and the belt keep the engaged or separated state; and
preferably, the switch triggering part is a convex block arranged on the driving part, in a rotating process of the driving part, the protruding part is in contact with the induction switch, to trigger the induction switch.

5. The clutch device for the clothing processing device according to claim 4, wherein the induction switch comprises a first contact and a second contact, the driving part, corresponding to the first contact and the second contact, is respectively provided with a first switch triggering part and a second switch triggering part in a protruding manner, when the driving part rotates to a position at which the driven wheel is engaged with the belt, the first switch triggering part or the second switch triggering part triggers the corresponding contact, and the driving mechanism is stopped;
when the driving part rotates to the position at which the driven wheel is separated from the belt, the second switch triggering part or the first switch triggering part triggers the corresponding contact, and the driving mechanism is stopped.

6. The clutch device for the clothing processing device according to claim 5, wherein the driving part comprises a blocky body, the first contact and the second contact are arranged in sequence along a same direction in parallel with an axis of the motor, the first switch triggering part is arranged on the blocky body corresponding to the first contact, , the second switch triggering part is on the blocky body corresponding to the second contact, and the connecting part is arranged on the blocky body in a same radial direction as the first switch triggering part or the second switch triggering part; and
the switch triggering part provided with the connecting part rotates and is far away from the driving motor, the driven wheel is engaged with the belt, another switch triggering part is in contact with the corresponding contact, the driving mechanism is stopped, the switch triggering part provided with the connecting part rotates and is adjacent to the driving motor, the driven wheel is separated from the belt, the switch triggering part provided with the connecting part is in contact with the corresponding contact, and the driving mechanism is stopped.

7. The clutch device for the clothing processing device according to claim 5 or 6, wherein the first switch triggering part and the second switch triggering part are respectively arranged at two opposite sides on the blocky body, the induction switch is arranged on a top of the blocky body, and two induction contacts of the induction switch are respectively arranged at tops of the two switch triggering parts; and
when the switch triggering part provided with the connecting part rotates to a lowest end, the driven wheel is engaged with the belt, another switch triggering part is in contact with the corresponding contact, the driving mechanism is stopped; when the switch triggering part provided with the connecting part rotates to the top, the driven wheel is separated from the belt, the switch triggering part provided with the connecting part is in contact with the corresponding contact, and the driving mechanism is stopped.

8. The clutch device for the clothing processing device according to any of claims 4-7, wherein the transmission part is an elastic piece, the clutch device comprises a limiting piece, an end of the limiting piece is connected onto the connecting part of the driving part, and another end of the limiting piece is connected and matched with the rocker arm, in a process the driving part driving or fixing the rocker arm, a relative distance between the connecting part limiting the driving part and the rocker arm is limited to be within a certain range, and a spring is protected.

9. The clutch device for the clothing processing device according to claim 8, wherein the rocker arm is provided with a protruding connecting part, an end of the limiting piece is connected to the protruding connecting part on the driving part in a rotatable manner, another end of the limiting piece is provided with a strip-shaped chute, the protruding connecting part on the rocker arm is connected with the chute in a slidable manner, and the chute limits the rocker arm to rotate within a certain range.

10. The clutch device for the clothing processing device according to any of claim 8 or 9, wherein the elastic piece is the spring, an end of the spring is connected to the connecting part on the driving part, another end of the spring is connected to the protruding connecting part on the rocker arm, and the limiting piece is arranged to go through the spring.
